Europäisches Patentamt

European Patent Office

Office européen des brevets

(19)

(11) Veröffentlichungsnummer: **0 170 793**
**B1**

## (12) EUROPÄISCHE PATENTSCHRIFT

(45) Veröffentlichungstag der Patentschrift:
**29.11.89**

(21) Anmeldenummer: **85105538.4**

(22) Anmeldetag: **07.05.85**

(51) Int. Cl.⁴: **H 04 L 27/12,** H 04 L 27/16

(54) **Durch binäre Datensignale modulierbarer Hochfrequenzsender.**

(30) Priorität: **04.08.84 DE 3428845**

(43) Veröffentlichungstag der Anmeldung:
**12.02.86 Patentblatt 86/7**

(45) Bekanntmachung des Hinweises auf die Patenterteilung:
**29.11.89 Patentblatt 89/48**

(84) Benannte Vertragsstaaten:
**DE FR GB IT**

(56) Entgegenhaltungen:
**EP-A- 0 038 520**
**EP-A- 0 073 699**
**DE-B- 2 735 011**
**FR-A- 2 250 226**
**US-A- 3 962 653**

(73) Patentinhaber: **ROBERT BOSCH GMBH, Postfach 50,**
**D-7000 Stuttgart 1 (DE)**

(72) Erfinder: **Gorzel, Heribert, Dipl.-Ing., Forstweg 33 c,**
**D-1000 Berlin 28 (DE)**

(74) Vertreter: **Schmidt, Hans-Ekhardt, Robert Bosch GmbH**
**Geschäftsbereich Elektronik Patent- und**
**Lizenzabteilung Forckenbeckstrasse 9-13,**
**D-1000 Berlin 33 (DE)**

## Beschreibung

Die Erfindung geht von einem Hochfrequenzsender nach dem Oberbegriff des Anspruchs 1 aus. Ein derartiger Hochfrequenzsender ist in FR-A 2 250 226 offenbart.

### Stand der Technik

Es sind durch binäre Datensignale modulierbare Hochfrequenzsender bekannt (FR-A 2 250 226, EP-A 0 038 520), bei denen jedoch eine hohe Frequenzkonstanz von zum Beispiel $5 \cdot 10^8$ für ein Frequenzband unterhalb 70 cm nicht eingehalten werden kann.

Es sind auch weitere durch binäre Datensignale modulierbare Hochfrequenzsender bekannt, die einen quarzstabilen modulierbaren spannungsgesteuerten Oszillator (VCXO) voraussetzen, der mit seinen Stabilitätseigenschaften an der Grenze des physikalisch Möglichen operiert und die geforderte Frequenzkonstanz von zum Beispiel $5 \cdot 10^{-7}$ gerade noch bis hinunter zum 70-cm-Band sicherstellt. Ein anderer bekannter durch binäre Datensignale modulierbarer Hochfrequenzsender geht von einem mit einer PLL(phase-locked loop)-Schaltung synchronisierten spannungsgesteuerten Oszillator aus. Bei einem derartigen Hochfrequenzsender muss jedoch während der Modulation mit dem Datensignal die Regelschleife der PLL-Schaltung geöffnet werden, so dass die Frequenzgenauigkeit durch die Kurzzeiteigenschaften des spannungsgesteuerten Oszillators bestimmt wird. Deshalb kann ein derartiger Hochfrequenzsender auch nur zeitlich begrenzte Datenströme übertragen. In bestimmten Zeitintervallen muss dann jeweils nachsynchronisiert werden, wobei während der Dauer des Nachsynchronisierens keine Datenmodulation stattfinden kann.

### Aufgabe

Der Erfindung liegt die Aufgabe zugrunde, einen durch binäre Datensignale modulierbaren Hochfrequenzsender nach der Gattung des Anspruchs 1 zu schaffen, dessen Ausgangssignalfrequenz $f_H$ (für den Binärwert H = high) und $f_L$ (für den Binärwert L = low) eine sehr hohe Langzeitstabilität im Bereich des 70- und des 35-cm-Bandes aufweist.

### Vorteile der Erfindung

Der erfindungsgemässe Hochfrequenzsender mit den kennzeichnenden Merkmalen des Anspruchs 1 hat den Vorteil, dass sich eine um mindestens eine Grössenordnung höhere Langzeitkonstanz von zum Beispiel $5 \cdot 10^{-8}$ im 70- und 35-cm-Band erzielen lässt. Ein derartiger hochkonstanter Datensender wird insbesondere beim Gleichwellenfunk benötigt.

Ein Hochfrequenzsender mit den vorstehend genannten Merkmalen vereinfacht den Aufwand zur Sicherstellung der Frequenzkonstanz des Ausgangssignals des Hochfrequenzsenders.

### Zeichnung

Ein Ausführungsbeispiel der Erfindung wird in der Zeichnung anhand mehrerer Figuren dargestellt und in der nachfolgenden Beschreibung näher erläutert. Die Zeichnung zeigt in

Fig. 1 ein Blockschaltbild eines erfindungsgemässen Hochfrequenzsenders,

Fig. 2A die Datensignalspannung in Abhängigkeit von der Zeit,

Fig. 2B den zeitlichen Verlauf der Messintervalle,

Fig. 2C den zeitlichen Verlauf der Perioden der zu messenden Hubfrequenz $\Delta f$,

Fig. 2D den zeitlichen Verlauf der Steuerspannung für die Messzeit,

Fig. 2E den zeitlichen Verlauf der zum Messen verwendeten Referenzfrequenz,

Fig. 2F den zeitlichen Verlauf der analogen Ausgangsspannung am Ausgang des Digital/Analog-Wandlers,

Fig. 2G den zeitlichen Verlauf der Messimpulse $I_H$ und

Fig. 2H den zeitlichen Verlauf der Missimpulse $I_L$.

### Beschreibung der Erfindung

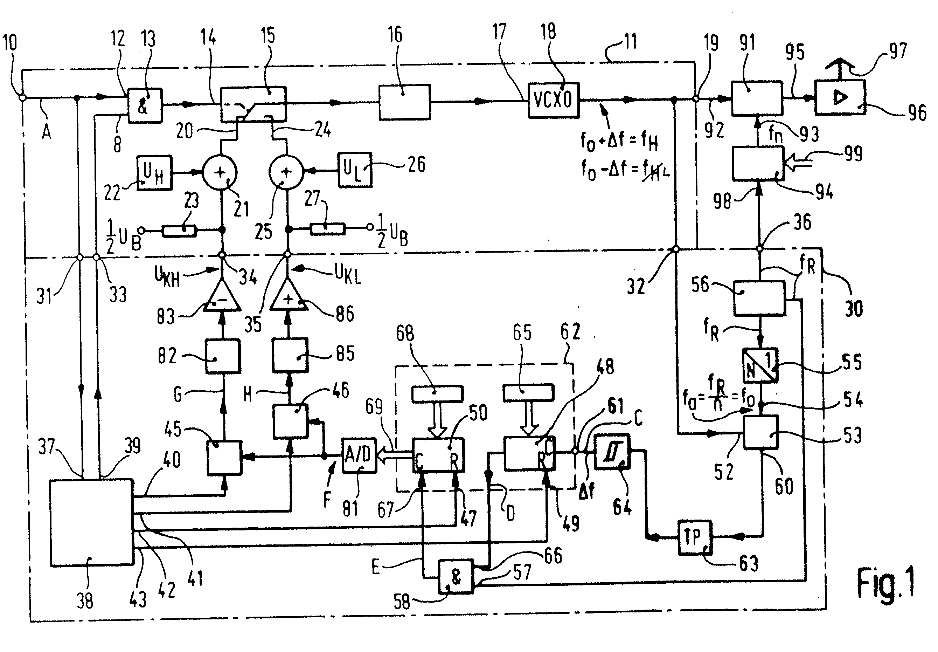

In Fig. 1 bezeichnet 10 einen Eingang eines erfindungsgemässen Hochfrequenzsenders bzw. dessen Datenmodulators 11; vgl. durch strichpunktierte Linien umrahmten oberen Schaltungsteil in Fig. 1. Der Eingang 10 ist in dem Datenmodulator mit einem ersten Eingang 12 einer UND-Schaltung 13 verbunden, an deren Ausgang sich ein Steuereingang 14 eines elektronischen Umschalters 15 anschliesst. Der Ausgang des Umschalters steht über ein Tiefpassfilter 16 mit einem Steuereingang 17 eines spannungsgesteuerten Oszillators 18 in Verbindung, dessen Ausgang mit 19 bezeichnet ist und gleichzeitig den Ausgang des Datenmodulators 11 bildet.

Der Umschalter 15 weist einen ersten Eingang 20 auf, der mit dem Ausgang einer ersten Additionsschaltung 21 verbunden ist. Ein erster Eingang der Additionsschaltung ist mit einer ersten Referenzpotentialquelle 22 und ein zweiter Eingang mit einem ersten Widerstand 23 verbunden, der an dem halben Betriebspotential $U_B$ liegt. Analog dazu ist ein zweiter Eingang 24 des Umschalters 15 mit einem Ausgang einer zweiten Additionsschaltung 25 verbunden, deren erster Eingang mit einer zweiten Referenzpotentialquelle 26 und deren zweiter Eingang mit einem zweiten Widerstand 27 verbunden ist, der ebenfalls an dem halben Betriebspotential $U_B$ liegt.

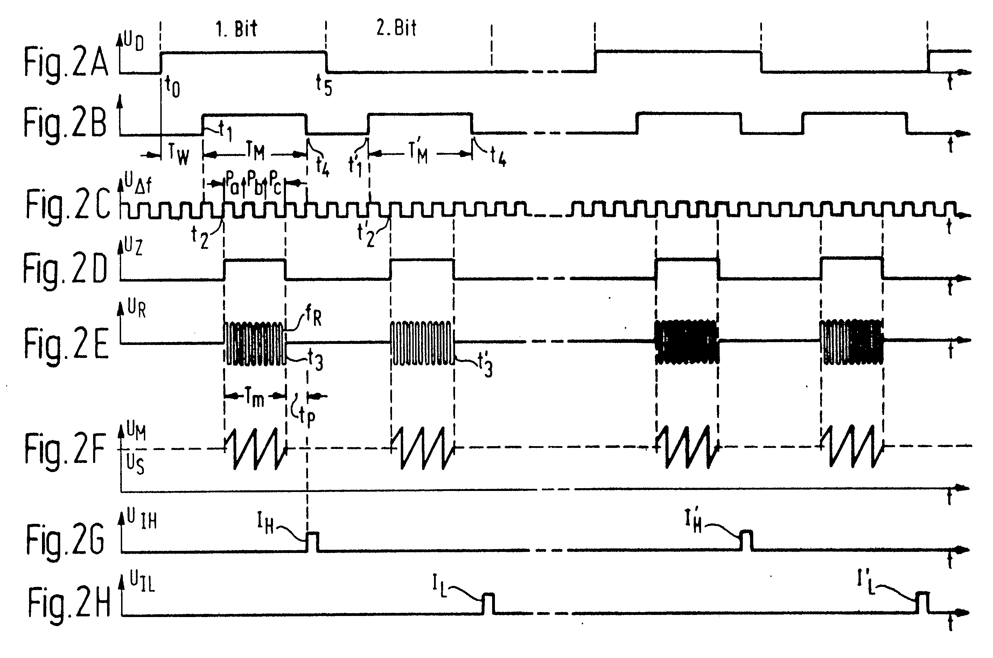

Die Wirkungsweise des vorstehend beschriebenen bekannten Datenmodulators 11 ist folgende. Es sei zunächst vorausgesetzt, dass zwischen dem Eingang 10 und dem Eingang 14 eine direkte Verbindung bestehe. Liegt dann am Eingang 10 eine Datensignalspannung $U_D$ (vgl. Fig. 2A, Zeitpunkte $t_0 \ldots t_5$) mit dem Binärwert H (high), so bleibt der Umschalter 15 in der in Fig. 1 gezeigten Schalterstellung, in welcher die Summe der Potentiale $U_H$ und 1/2 $U_B$ über das Tiefpassfilter 16 an den Steuereingang 17 des spannungsgesteuerten Oszillators 18 gelangt. Der Oszillator 18 ist vorzugsweise ein freilaufender quarzstabilisierter Oszillator, dessen Mittenfrequenz mit $f_o$ bezeichnet ist. Durch die Summe der Potentiale $U_H$ und 1/2 $U_B$ wird der Oszillator derart umgetastet, dass seine Mittenfrequenz $f_o$ um einen bestimmten Frequenzwert $\Delta f$ (= Hubfrequenz) erhöht wird, so dass sich eine Frequenz $f_H$ ergibt, die dem Binärwert H entspricht. Weist das Datensignal $U_D$ den Binärwert L (low) auf, so wird der Umschalter 15 in die andere Schalterstellung umgeschaltet, in welcher die Summe der Potentiale $U_L$ und 1/2 $U_B$ über das Tiefpassfilter 16 an den Steuereingang 17 des Oszillators 18 gelangt. Durch die Summe dieser Potentiale wird die Mittenfrequenz $f_o$ des Oszillators um den gleichen Frequenzwert $\Delta f$ vermindert, so dass sich eine Frequenz $f_L$ ergibt, die dem Binärwert L entspricht. Das Tiefpassfilter 16 verrundet die beim Umschalten der Potentiale auftretenden Schaltflanken und bewirkt somit eine Einengung des Frequenzspektrums.

Um die mit dem vorstehenden Datenmodulator erzielbare Frequenzgenauigkeit zu erhöhen, wird eine im folgenden näher beschriebene Zusatzschaltung 30 vorgesehen; vgl. durch strichpunktierte Linien umrahmten unteren Schaltungsteil in Fig. 1.

Die Zusatzschaltung 30 ist mit zwei Eingängen 31 und 32 und vier Ausgängen 33...36 versehen. Der erste Eingang 31 ist ausserhalb der Zusatzschaltung mit dem Eingang 10 des Datenmodulators 11 und innerhalb der Zusatzschaltung mit einem Eingang 37 einer elektronischen Steuerungsschaltung 38 verbunden, die fünf Ausgänge 39...43 aufweist. Der erste Ausgang 39 ist mit dem ersten Ausgang 33 der Zusatzschaltung 30 und dieser mit einem zweiten Eingang 28 der UND-Schaltung 13 verbunden. Der zweite Ausgang 40 steht mit einem Steuereingang einer ersten Sample-and-hold-Schaltung 45, der dritte Ausgang 41 mit einem Steuereingang einer zweiten Sample-and-hold-Schaltung 46, der vierte Ausgang 42 mit einem Reset-Eingang 47 eines zweiten programmierbaren Zählers 50 und der fünfte Ausgang 43 mit einem Reset-Eingang 49 eines ersten programmierbaren Zählers 48 in Verbindung. Der zweite Eingang 32 der Zusatzschaltung 30 ist mit dem Ausgang 19 des Datenmodulators 11 und innerhalb der Zusatzschaltung mit einem ersten Eingang 52 einer Mischschaltung 53 verbunden, deren zweitem Eingang 54 eine mit einem Frequenzteiler 55 in einem festen Teilerverhältnis 1/N geteilte Referenzfrequenz $f_R$ eines Referenzfrequenzoszillators 56 zugeführt wird. Die Referenzfrequenz $f_R$ liegt ausserdem an einem ersten Eingang 57 einer weiteren UND-Schaltung 58 sowie an dem vierten Ausgang 36 der Zusatzschaltung 30. Zwischen einem Ausgang 60 der ersten Mischschaltung 53 und einem Messeingang 61 einer digitalen Messschaltung 62 liegen ein weiteres Tiefpassfilter 63 und ein Begrenzerverstärker 64. Mit dem Messeingang 61 der digitalen Messschaltung 62 ist ein Clock-Eingang des ersten Zählers 48 verbunden, zu dem eine Vorwahlschaltung 65 (prescaler) gehört. Ein Ausgang des Zählers 48 ist mit einem zweiten Eingang 66 der UND-Schaltung 58 verbunden. Ein Ausgang der zweiten UND-Schaltung 58 steht mit einem Clock-Eingang 67 des zweiten Zählers 50 in Verbindung, zu dem eine Vorwahlschaltung 68 gehört. Ein paralleler Ausgang 69 des zweiten Zählers 50 bildet den Ausgang der digitalen Messschaltung 62.

An den Ausgang 69 schliesst sich ein Digital/Analog-Wandler 81 an, dessen Ausgang mit einer ersten Reihenschaltung aus der ersten Schaltung 45, einem ersten Integrator 82 und einem invertierenden Verstärker 83 verbunden ist, dessen Ausgang dem Ausgang 34 entspricht. Der Ausgang des Digital/Analog-Wandlers 81 ist ausserdem mit einer zweiten Reihenschaltung verbunden, die aus der zweiten Schaltung 46, einem zweiten Integrator 85 und einem Verstärker 86 besteht. Der Ausgang des Verstärkers 86 entspricht dem Ausgang 35 der Zusatzschaltung 30. Die Ausgänge 34 und 35 liegen an den ersten Eingängen der Additionsschaltungen 21 und 25.

Zu dem Hochfrequenzsender nach Fig. 1 gehört noch eine weitere Mischschaltung 91, deren erster Eingang 92 mit dem Ausgang 19 des Datenmodulators 11, deren zweiter Eingang 93 mit dem Ausgang einer PLL (phase-locked loop)-Schaltung 94 und deren Ausgang 95 mit einem Endverstärker 96 verbunden ist, an den sich eine Sendeantenne 97 anschliesst. Ein Referenzfrequenzanschluss 98 der PLL-Schaltung 94 ist mit dem Ausgang 36 der Zusatzschaltung 30 verbunden. Die PLL-Schaltung 94 weist Steuereingänge 99 auf.

Die Wirkungsweise der kompletten Schaltung eines Hochfrequenzsenders nach Fig. 1 ist folgende. Bei der bereits weiter oben beschriebenen Frequenzumtastung des spannungsgesteuerten Oszillators 18 mittels der Potentiale $U_H$ und $U_L$ entsprechend den augenblicklichen Binärwerten des Datensignals $U_D$ (Fig. 2A) findet durch die Zusatzschaltung 30 eine Erhöhung der Frequenzgenauigkeit der von dem Oszillator 18 gelieferten Frequenzen $f_H$ und $F_L$ auf folgende Weise statt.

Die Fequenzen $f_H$ bzw. $f_L$ liegen am Eingang 52 der Mischschaltung 53. Aus der Referenzfrequenz $f_R$ des Referenzfrequenzoszillators 56 wird durch Frequenzteilung im Verhältnis 1/N eine Hilfsfrequenz $f_a$ gebildet, die gleich der Mittenfrequenz $f_o$ des spannungsgesteuerten Oszillators ist, so dass sich nach der Mischung die Zwischenfrequenzlage Null ergibt. Durch die Mischung der Frequenzen $f_H$ bzw. $f_L$ und der Hilfsfrequenz $f_a$ entsteht am Ausgang 60 die Hubfrequenz $+\Delta f$ bzw. $-\Delta f$. Aus der Ausgangsspannung der Mischschaltung 53 wird mittels des Tiefpassfilters 63 eine Signalspannung der Frequenz $\Delta f$ ausgefiltert, die mittels des Begrenzerverstärkers 64 in eine Rechteckspannung umgeformt und dem Eingang 61 der digitalen Messschaltung 62 zugeführt wird. Stellt die elektronische Steuerungsvorrichtung 38, deren Eingang 37 die Datensignalspannung $U_D$ vom Eingang 10 zugeführt bekommt, fest, dass das erste Bit eintrifft, so gibt sie über ihren Ausgang 43 nach einer Wartezeit $t_W$, die das Einschwingverhalten der Schaltung berücksichtigt, einen Rücksetzimpuls an den Reset-Eingang 49 des ersten Zählers 48 ab, der dadurch für eine Zählung vorbereitet wird. Mit der darauffolgenden ersten Flanke (vgl. Zeitpunkt $t_2$ in Fig. 2C) der am Messeingang 61 liegenden Rechteckspannung der Hubfrequenz $\Delta f$ zählt der Zähler 50 zum Beispiel drei Perioden ab, die mit der Vorwahlschaltung 65 fest eingestellt sind. Zu dem Zeitpunkt $t_3$ findet am Ausgang des ersten Zählers 50 ein Potentialwechsel statt (vgl. Fig. 2D), wodurch die zweite UND-Schaltung 58 die Referenzfrequenz $f_R$ des Referenzfrequenzoszillators 56 an den Clock-Eingang 67 des zweiten Zählers 48 weiterleitet (vgl. Fig. 2E). Die Referenzfrequenz $f_R$ von zum Beispiel 10 MHz liegt erheblich höher als die Hubfrequenz $\Delta f$ von zum Beispiel 5 kHz, so dass sie zum genauen digitalen Messen der Periodendauern $P_a$, $P_b$, $P_c$ (vgl. Fig. 2C) geeignet ist. Für die Dauer von drei Perioden $P_a$, $P_b$, $P_c$, das heisst bis zu einem Zeitpunkt $t_3$, bleibt dieser Zustand erhalten (vgl. Fig. 2E). Während der mit $t_m$ bezeichneten Messzeit zählt der zweite Zähler 48 die Zahl der Perioden der Referenzfrequenz $f_R$, wobei der als programmierbarer Rückwärtszähler ausgebildete zweite Zähler die Zählung in vorzugsweise drei Zyklen durchführt (vgl. Fig. 2F). Der jeweilige Zählerstand des zweiten Zählers wird mittels des Digital/Analog-Wandlers 81 in analoge Spannungswerte $U_M$ umgewandelt. Am Ende der Messung liegt am Ausgang des Digital/Analog-Wandlers ein Spannungswert, der je nach dem Ist-Wert der Periodendauern der Hubfrequenz $\Delta f$ grösser oder kleiner als ein Soll-Wert $U_S$ ist. Die jeweilige Abweichung vom Soll-Wert wird zur Bildung einer Korrekturspannung $U_{KH}$ bzw. $U_{KL}$ ausgenutzt.

Zu diesem Zweck gibt die elektronische Steuerungsschaltung 38, die eine Zeitsteuerung enthält, kurze Zeit nach dem Ende der Periodendauermessung, nämlich zu dem Zeitpunkt $t_4$, an ihrem Ausgang 40 oder 41 eine bestimmte Spannung zum Steuern der Sample-and-hold-Schaltung 45 oder 46 ab, je nachdem, ob am Eingang 10 gerade ein H- oder ein L-Signal ansteht. Da in dem betrachteten Messintervall $t_M$ die Datensignalspannung ein H-Signal aufweist, gibt die elektronische Steuerungsschaltung 38 an ihrem Ausgang 40 die bestimmte Spannung ab, mit dem die Sample-and-hold-Schaltung 45 veranlasst wird, die analoge Messspannung $U_M$ am Ausgang des Digital-Analog-Wandlers festzustellen und nach einer Pufferzeit $t_P$ einen entsprechenden Impuls $I_H$ zu liefern; vgl. Fig. 2G.

Die Auswertung der folgenden Bits geschieht in analoger Weise, wobei am Ende des zweiten Messintervalls $t'_M$, das heisst zu einem Zeitpunkt $t'_3$ wegen des am Eingang 10 anstehenden L-Signals die Steuerungsschaltung 38 an ihrem Ausgang 41 die bestimmte Signalspannung an die zweite Sample-and-hold-Schaltung 46 abgibt, wodurch diese aus der am Ausgang des Digital-Analog-Wandlers 81 zum Zeitpunkt $t'_3$ anstehende Messspannung $U_M$ (vgl. Fig. 2F) einen Korrekturimpuls $I_L$ bildet. Bei der weiteren Messung werden dann je nach dem logischen Wert der Datensignalspannung $U_D$ weitere Korrekturimpulse $I'_H$, $I'_L$ gebildet. Die Impulse $I_H$, $I'_H$ ... werden in der Integrationsschaltung 82 und die Impulse $I_L$, $I'_L$ ... in der Integrationsschaltung 85 integriert und mittels der Verstärker 83, 86 verstärkt, so dass sich je eine Korrekturspannung $U_{KH}$ bzw. $U_{KL}$ ergibt, die den Additionsschaltungen 21, 25 zugeführt wird. Auf diese Weise findet eine Korrektur der von dem Oszillator 18 abgegebenen Frequenzen $f_H$, $f_L$ in Abhängigkeit von der Differenz zwischen der Soll-Hubfrequenz $\Delta f$ und der jeweils gemessenen Ist-Hubfrequenz $\Delta f$ im Sinne einer Langzeitstabilisierung der Frequenz statt.

Die von dem Oszillator 18 gelieferte Frequenz $f_o$ bildet eine mit der Frequenz $\Delta f$ modulierte Zwischenfrequenz, die in der zweiten Mischschaltung 91 mit einer Oszillatorfrequenz $f_n$ der PLL-Schaltung 94 gemischt und damit in die hochfrequente Ebene umgesetzt wird. Mit an den Eingängen 99 der PLL-Schaltung liegenden umschaltbaren Signalspannungen kann die Oszillatorfrequenz $f_n$ entsprechend einem gewünschten Funkkanalraster der über die Antenne 97 abzustrahlenden Hochfrequenzsignale geändert werden.

Die Steuerungsschaltung 38 kann im übrigen vorteilhafterweise derart ausgebildet sein, dass sie auch bei einem kürzeren Ausfall der Datensignalspannung $U_D$ die Lieferung von Messimpulsen $I_H$, $I_L$ an die Additionsschaltungen 21, 24 veranlasst, um die Zusatzeinrichtung 30 in Betrieb zu halten. In diesem Fall muss jedoch dafür gesorgt werden, dass der weiteren Mischschaltung 91 keine Zwischenfrequenz zugeführt wird. Sobald eine Datensignalspannung dann wieder am Eingang 10 erscheint, setzt die ordnungsgemässe Korrektur der Steuerspannungen ein, und die Aussendung der datenmodulierten Hochfrequenzspannung kann fortgesetzt werden.

**Patentansprüche**

1. Durch binäre Datensignale modulierbarer Hochfrequenzsender mit einem Datenmodulator (11), der einen spannungsgesteuerten Oszillator (18) enthält, dessen Mittenfrequenz durch eine dem jeweiligen Binärwert des Datensignals entsprechende Steuerspannung umgetastet wird, und mit einer Zusatzschaltung (30), die bitweise den Ist-Wert der Hubfrequenz ($\Delta f$) misst und bei Frequenzabweichungen von den Soll-Werten der jeweiligen Steuerspannung eine der jeweiligen Abweichung proportionale Korrekturspannung ($U_{KH}$, $U_{KL}$) hinzufügt, wobei die von dem spannungsgesteuerten Oszillator (18) abgegebenen Frequenzen ($f_H$, $f_L$) einem ersten Eingang (52) einer Mischschaltung (53) zugeführt werden, an deren zweiten Eingang (54) eine der Mittenfrequenz ($f_o$) des Oszillators identische Hilfsfrequenz ($f_a$) liegt, dadurch gekennzeichnet, dass die Summe einer bestimmten Zahl von Periodendauern der von der Mischschaltung (53) abgegebenen, mittels Tiefpassfilter (63) und Begrenzerverstärker (64) erhaltenen Hubfrequenz ($\Delta f$) digital gemessen wird und aus den Messergebnissen die Korrekturspannungen ($U_{KH}$, $U_{KL}$) erhalten werden, dass ein erster programmierbarer Zähler (48) die Zahl der zu messenden Perioden ($P_a$, $P_b$, $P_c$) der Hubfrequenz ($\Delta f$) festlegt, dass ein zweiter, als Rückwärtszähler ausgebildeter programmierbarer Zähler (50) die Zahl der Perioden der Referenzfrequenz ($f_R$) während der zu messenden Perioden der Hubfrequenz ermittelt, dass die ermittelte Zahl von Perioden der Hubfrequenz ($\Delta f$) mittels eines Digital/Analog-Wandlers (81) in einen analogen Spannungswert umgewandelt und mittels einer Sample-and-hold-Schaltung (45, 46) in einen entsprechenden Messimpuls ($I_H$, $I_L$) umgewandelt wird, dass aus den Messimpulsen durch einen Integrator (82, 85) die Korrekturspannung ($U_{KH}$, $U_{KL}$) erhalten wird, dass eine elektronische Steuerungsschaltung (38) mit dem Eingang (10) des Datenmodulators (11) verbunden ist und in Abhängigkeit von der Datensignalspannung ($U_D$) die zwischen dem Digital/Analog-Wandler (81) und den Integratoren (82, 85) liegende Sample-and-hold-Schaltungen (45, 46) sowie die programmierbaren Zähler (48, 50) zeitlich steuert und dass die Hilfsfrequenz ($f_a$) aus der geteilten Referenzfrequenz ($f_R$) eines Referenzfrequenzoszillators (56) abgeleitet wird, die gleichzeitig als Referenzfrequenz für eine PLL-Oszillatorschaltung (94) dient, die eine von mehreren, den Kanalfrequenzen des Hochfrequenzsenders entsprechenden Oszillatorfrequenzen ($f_n$) an einen zweiten Eingang (93) einer weiteren Mischschaltung (91) liefert, an deren ersten Eingang die Frequenzen ($f_H$, $f_L$) des spannungsgesteuerten Oszillators (18) liegen und dessen Ausgang (95) mit einem Endverstärker (96) des Hochfrequenzsenders verbunden ist.

2. Hochfrequenzsender nach Anspruch 1, dadurch gekennzeichnet, dass der zweite programmierbare Zähler (50) derart programmiert ist, dass er die Zählung in mehreren Intervallen (Fig. 2F) ausführt.

**Claims**

1. A high-frequency transmitter modulatable by binary data signals, having a data modulator (11) which includes a voltage-controlled oscillator (18) whose centre frequency is set by a control voltage corresponding to the prevailing binary value of the data signal, and having an additional circuit (30) which measures the actual value of the deviation frequency ($\Delta f$) by bits and, in the event of the frequency differing from the desired values of the prevailing control voltage, adds a correction voltage ($U_{KH}$, $U_{KL}$) proportional to the prevailing difference, wherein the frequencies ($f_H$, $f_L$) supplied by the voltage-controlled oscillator (18) are fed to a first input (52) of a mixing circuit (53) whose second input (54) carries an auxiliary frequency ($f_a$) identical to the centre frequency ($f_o$) of the oscillator, characterised in that the sum of a specific number of periods of the

deviation frequency ($\Delta f$), supplied by the mixing circuit (53) and received by means of low-pass filter (63) and limiter amplifier (64), is measured digitally and the correction voltages ($U_{KH}$, $U_{KL}$) are obtained from the measurement results, that a first programmable counter (48) establishes the number of the periods ($P_a$, $P_b$, $P_c$) of the deviation frequency ($\Delta f$) which are to be measured, that a second programmable counter (50) in the form of a count-down counter ascertains the number of periods of the reference frequency ($f_R$) during the periods of the deviation frequency which are to be measured, that the number of periods of the deviation frequency ($\Delta f$) which has been ascertained is converted to an analog voltage value by means of a digital-to-analog converter (81) and is converted to a corresponding measuring pulse ($I_H$, $I_L$) by means of a sample-and-hold circuit (45, 46), that the correction voltage ($U_{KH}$, $U_{KL}$) is obtained from the measuring pulses by an integrator (82, 85), that an electronic control circuit (38) is connected to the input (10) of the data modulator (11) and, in dependence upon the data signal voltage ($U_D$), controls, with respect to time, the sample-and-hold circuits (45, 46) located between the digital-to-analog converter (81) and the integrators (82, 83), as well as the programmable counters (48, 50), and that the auxiliary frequency ($f_a$) is derived from the divided reference frequency ($f_R$) of a reference frequency oscillator (56) which at the same time serves as a reference frequency for a PLL oscillator circuit (94) which supplies one of a plurality of oscillator frequencies ($f_n$), corresponding to the channel frequencies of the high-frequency transmitter, to a second input (93) of a further mixing circuit (91) whose first input carries the frequencies ($f_H$, $f_L$) of the voltage-controlled oscillator (18) and whose output (95) is connected to an output amplifier (96) of the high-frequency-transmitter.

2. A high-frequency transmitter as claimed in claim 1, characterised in that the second programmable counter (5) is programmed in such a way that it performs the counting operation in a plurality of intervals (Fig. 2F).

**Revendications**

1. Emetteur haute fréquence modulable par des signaux binaires de données, comportant un modulateur de données (11), comprenant un oscillateur (18) commandé par une tension et dont la fréquence médiane est changée par une tension de commande correspondant à la valeur binaire respective du signal de données ainsi qu'un circuit complémentaire (30) qui mesure bit par bit la valeur réelle de l'incursion de fréquence ($\Delta f$) et en cas de différences de fréquences par rapport à des valeurs de consigne de la tension de commande respective, ajoute une tension de correction ($U_{KH}$, $U_{KL}$) proportionnelle à la différence respective et les fréquences ($f_H$, $f_L$) fournies par l'oscillateur commandé en tension (18) sont appliquées à une première entrée (52) d'un circuit mélangeur (53) dont la seconde (54) reçoit une fréquence auxiliaire (f$_a$) identique à la fréquence médiane (f$_o$) de l'oscillateur, émetteur caractérisé en ce qu'on mesure numériquement la somme d'un nombre déterminé de durées de périodes de l'incursion de fréquence (Δf) fourni par le circuit mélangeur (53) par l'intermédiaire du filtre passe-bas (63) et de l'amplificateur à limitation de fréquence (64), et à partir des résultats des mesures on obtient les tensions de correction (U$_{KH}$, U$_{KL}$), et en ce qu'un premier compteur programmable (48) fixe le nombre des périodes (P$_a$, P$_b$, P$_c$) à mesurer de l'incursion de fréquence (Δf), un second compteur programmable (50) constitué par un décompteur, déterminant le nombre des périodes de fréquence de référence (f$_R$) pendant les périodes à mesurer de l'incursion de fréquence, et on transforme le nombre obtenu des périodes de l'incursion de fréquence (Δf) à l'aide d'un convertisseur numérique/analogique (81) en une valeur analogique de la tension et à l'aide d'un circuit d'échantillonnage et de maintien (45, 46) on transforme en une impulsion de mesure (I$_H$, I$_L$) correspondante et on forme la tension de correction (U$_{KH}$, U$_{KL}$) à l'aide des impulsions de mesure par un intégrateur (82, 85), un circuit de commande électronique (38) étant relié à l'entrée (10) du démodulateur (11) et commande dans le temps et en fonction de la tension du signal de données (U$_D$) les circuits d'échantillonnage et de maintien (45, 46) prévus entre le convertisseur numérique/analogique (81) et les intégrateurs (82, 85) ainsi que les compteurs programmables (48, 50), la fréquence auxiliaire (f$_a$) étant obtenue à partir de la fréquence de référence (f$_R$), divisée, fournie par un oscillateur de fréquence de référence (56) et qui sert en même temps de fréquence de référence de l'oscillateur PLL (94), fournissant l'une des fréquences d'oscillateur (f$_n$) parmi plusieurs fréquences d'oscillateur correspondant aux fréquences du canal de l'émetteur haute fréquence à une seconde entrée (93) d'un autre circuit mélangeur (91) dont la première entrée reçoit les fréquences (f$_H$, f$_L$) de l'oscillateur commandé en tension (18), dont la sortie (95) est reliée à un amplificateur de sortie (96) de l'émetteur haute fréquence.

2. Emetteur haute fréquence selon la revendication 1, caractérisé en ce que le second compteur programmable (50) est programmé pour effectuer un comptage sur plusieurs intervalles (fig. 2F).

Fig.1

Fig. 2A Fig. 2B Fig. 2C Fig. 2D Fig. 2E Fig. 2F Fig. 2G Fig. 2H

9